# EUROPÄISCHE PATENTSCHRIFT

(11) **EP 4 460 440 B1**
(45) Veröffentlichungstag und Bekanntmachung des Hinweises auf die Patenterteilung: **09.07.2025**
(21) Anmeldenummer: 24703783.1
(22) Anmeldetag: 07.02.2024
(51) Int. Cl.: B60N 3/10

(54) **GETRÄNKEHALTER EINES KRAFTFAHRZEUGS**
DRINKS HOLDER OF A MOTOR VEHICLE
SUPPORT DE BOISSON D'UN VÉHICULE À MOTEUR

(30) Priorität: 20.03.2023 DE 102023001096
(43) Veröffentlichungstag der Anmeldung: 13.11.2024
(73) Patentinhaber: Mercedes-Benz Group AG, 70372 Stuttgart (DE)
(72) Erfinder: SCHULZE, Tobias, 72218 Wildberg (DE); KRAUEL, Alexander, 70567 Stuttgart (DE); EHRLICHER, Thomas, 70599 Stuttgart (DE)
(74) Vertreter: Novagraaf Group
(86) Internationale Anmeldenummer: PCT/EP2024/052992
(87) Internationale Veröffentlichungsnummer: WO 2024/193891

(56) Entgegenhaltungen:
- DE-B4- 102005 003 078
- US-A- 5 704 579

## Beschreibung

Die Erfindung betrifft einen Getränkehalter eines Kraftfahrzeugs gemäß dem Oberbegriff des Patentanspruchs 1.

Getränkehalter oder Becherhalter oder Cupholder sind in Kraftfahrzeugen zur Aufnahme von Trinkgefäßen beziehungsweise Getränkebehältnissen wie Getränkeflaschen, Getränkebechern oder dergleichen vorgesehen und werden hierzu in vielfältigen Ausführungsformen und Ausgestaltungen im Innenraum des Kraftfahrzeugs eingesetzt. Hierfür sind insbesondere durch Ausbildung von Vertiefungen in Mittelkonsolen oder in Armlehnen des Kraftfahrzeugs oder durch Klappmechanismen sowie durch Faltmechanismen realisierte Ausführungsvarianten gebräuchlich.

Zusätzlich können zur Fixierung eines im Getränkehalter oder Becherhalter oder Cupholder eingesetzten Getränkebehältnisses beziehungsweise Trinkgefäßes insbesondere Federn, elastische Bänder oder ähnliche Hilfsmittel vorgesehen werden.

So ist aus der DE 10 2005 003 078 B4 ein Becherhalter für Kraftfahrzeuge beschrieben, der zur Halterung eines Trinkgefäßes ein zylinderförmiges Adapterteil aufweist, an dessen Innenseite mehrere elastische paraboloidförmig ausgebildete Halteelemente aus Kunststoff in einer radialen Orientierung angeordnet sind.

Der Erfindung liegt die Aufgabe zugrunde, einen Getränkehalter eines Kraftfahrzeugs anzugeben, bei dem eine sichere Aufnahme von Trinkgefäßen beziehungsweise Getränkebehältnissen in unterschiedlichen Dimensionierungen und Ausgestaltungen auf einfache Weise mit vorteilhaften Eigenschaften möglich ist.

Diese Aufgabe wird erfindungsgemäß durch einen Getränkehalter eines Kraftfahrzeugs mit den im Patentanspruch 1 angeführten Merkmalen gelöst.

Vorteilhafte Weiterbildungen des erfindungsgemäßen Getränkehalters sind Bestandteil der weiteren Patentansprüche.

Beim erfindungsgemäßen Getränkehalter eines Kraftfahrzeugs sind zur Fixierung von Getränkebehältnissen beziehungsweise Trinkgefäßen im Getränkehalter Halteelemente vorgesehen, die aus Permanentmagneten mit gleicher Magnetpolanordnung bestehenden Haltenocken ausgebildet sind.

Vorzugsweise bestehen die als Permanentmagnete ausgebildeten Haltenocken aus einem magnetisierbaren Kunststoffmaterial, insbesondere aus magnetisierbarem Polyphenylensulfid (PPS).

In mindestens zwei im Getränkehalter ausgebildeten Haltebereichen sind die als Permanentmagnete ausgebildeten Haltenocken übereinander in der Wandung des Getränkehalters beabstandet voneinander und von der Wandung des Getränkehalters überstehend angeordnet, vorzugsweise in Form einer Konturenlehre von der Wandung des Getränkehalters überstehend angeordnet.

Außerhalb des Getränkehalters, d.h. im Außenbereich des Getränkehalters, ist für jeden Haltebereich mit als Permanentmagnete ausgebildeten Haltenocken ein zu den Permanentmagneten des jeweiligen Haltebereichs korrespondierender Elektromagnet benachbart zu dem jeweiligen Haltebereich mit den als Permanentmagnete ausgebildeten Haltenocken angeordnet.

Vorzugsweise sind die Elektromagnete analog zu den Haltebereichen mit den als Permanentmagnete ausgebildeten Haltenocken äquidistant beabstandet voneinander im Außenbereich des Getränkehalters angeordnet, insbesondere radial im Außenbereich des Getränkehalters um den Getränkehalter herum äquidistant und benachbart zu den Haltebereichen angeordnet.

Hierbei sind die Elektromagnete zum Wechseln ihrer Polarität und damit ihrer Magnetfeldorientierung schaltbar ausgebildet und können daher je nach Schaltzustand entweder eine gleichsinnige magnetische Orientierung zu den als Permanentmagnete ausgebildeten Haltenocken in einem korrespondierenden Haltebereich aufweisen und daher eine abstoßende Wirkung entfalten oder eine gegensinnige magnetische Orientierung zu den als Permanentmagnete ausgebildeten Haltenocken in einem korrespondierenden Haltebereich aufweisen und daher eine anziehenden Wirkung entfalten.

Beim Schaltzustand mit einer gleichsinnigen magnetischen Orientierung verbunden mit einer abstoßenden Wirkung, wird das sich im Getränkehalter befindliche Getränkebehältnis beziehungsweise Trinkgefäß folglich durch die sich in Richtung des Getränkebehältnisses beziehungsweise Trinkgefäßes im Getränkehalter bewegenden Haltenocken im Getränkehalter fixiert.

Beim Schaltzustand mit einer gegensinnigen magnetischen Orientierung verbunden mit einer anziehenden Wirkung, werden die Haltenocken von dem sich im Getränkehalter befindlichen Getränkebehältnis beziehungsweise Trinkgefäß wegbewegt, das somit aus dem Getränkehalter entnommen werden kann.

Zur Variation des Schaltzustands der Elektromagnete und damit deren magnetischer Orientierung kann ein Bedienelement vorgesehen sein, beispielsweise ein als Tastschalter, Kippschalter oder Drehschalter ausgebildetes Bedienelement, das insbesondere von einem Insassen des Kraftfahrzeugs betätigbar ist.

Der Getränkehalter kann an einer hierfür geeigneten und für einen Bediener gut zugänglichen und leicht erreichbaren Position im Kraftfahrzeug angeordnet sein, insbesondere in der Mittelkonsole des Kraftfahrzeugs oder in einer Armauflage des Kraftfahrzeugs.

Mit dem vorgestellten erfindungsgemäßen Getränkehalter ist vorteilhafterweise eine einfache und sichere Halterung und Fixierung von unterschiedlichen Getränkebehältnissen beziehungsweise Trinkgefäßen im Getränkehalter möglich, insbesondere auch von Getränkebehältnissen beziehungsweise Trinkgefäßen mit unterschiedlichen Größen und Formgebungen.

Hierdurch kann der erfindungsgemäße Getränkehalter flexibel und kostengünstig an unterschiedlichen Einbauorten im Kraftfahrzeug zum Einsatz kommen,

Weitere Vorteile, Merkmale und Einzelheiten der Erfindung ergeben sich aus der nachfolgenden Beschreibung eines bevorzugten Ausführungsbeispiels sowie anhand der Zeichnung(en). Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: Eine schematische Schnittdarstellung eines Getränkehalters.
- Fig. 2: Eine schematische Draufsicht auf den Getränkehalter.

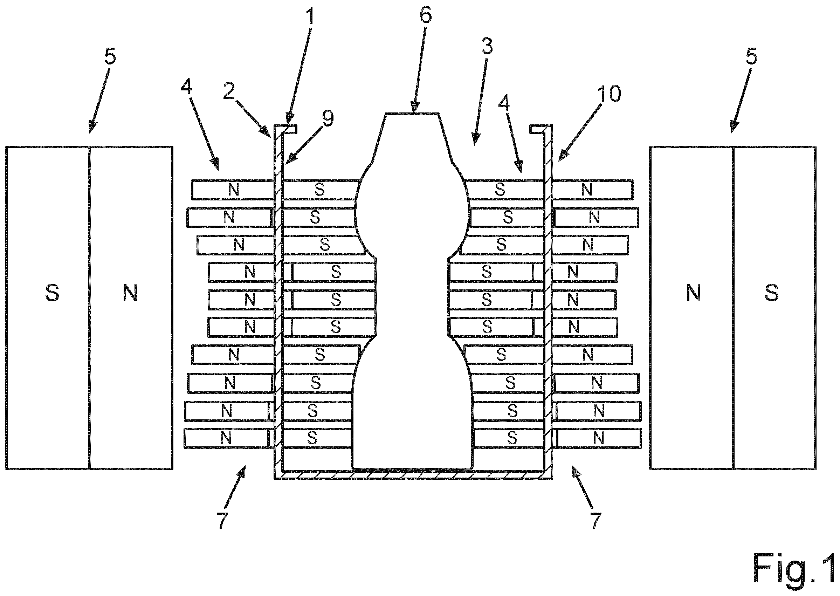

In der Figur 1 ist zu sehen, dass der in einem Kraftfahrzeug beispielsweise in der Mittelkonsole eingebaute Getränkehalter 1 in seiner Wandung 2 in einem Haltebereich 7 eine Vielzahl von übereinander angeordneten Haltenocken 4 aufweist.

Diese Haltenocken 4 bestehen beispielsweise aus einem magnetisierbaren Kunststoffmaterial, wie beispielsweise aus magnetisierbarem Polyphenylensulfid (PPS), und sind hierdurch als Permanentmagnete mit gleichsinniger magnetischer Orientierung ausgebildet.

Beispielsweise sind in einem Haltebereich 7 zwischen fünf und zehn derartige Haltenocken 4 als Permanentmagnete in Form einer Konturenlehre übereinander angeordnet, die sowohl auf der Innenseite 9 des Getränkehalters 1 als auch auf der Außenseite 10 des Getränkehalters 1 von der Wandung 2 des Getränkehalters 1 überstehen.

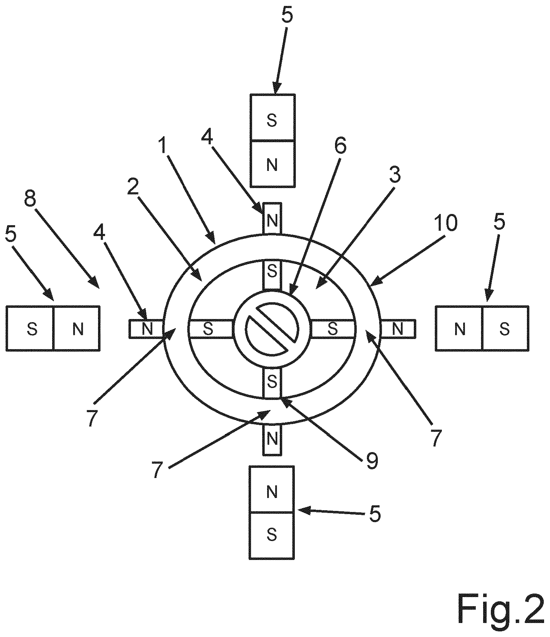

Wie insbesondere aus der Figur 2 ersichtlich ist, sind in der Wandung 2 des Getränkehalters 1 beispielsweise vier äquidistant voneinander angeordnete Haltebereiche 7 mit jeweils einer Vielzahl von Haltenocken 4 als Permanentmagnete ausgebildet.

Beabstandet vom Getränkehalter 1 ist im Außenbereich 8 des Getränkehalters 1 für jeden der Haltebereiche 7 mit jeweils einer Vielzahl von Haltenocken 4 als Permanentmagnete, ein korrespondierender Elektromagnet 5 angeordnet.

Beispielsweise sind bei vier äquidistant voneinander angeordneten Haltebereichen 7 dementsprechend auch vier korrespondierende Elektromagnete 5 vorgesehen.

Diese schaltbaren Elektromagnete 5 können je nach Schaltzustand ihre Polarität ändern und damit entweder, wie in Figur 1 und Figur 2 dargestellt, bei gleichsinniger magnetischer Orientierung zu den als Permanentmagnete ausgebildeten Haltenocken 4 eine abstoßende Wirkung auf diese Haltenocken 4 ausüben, wodurch die Haltenocken 4 in Richtung des Innenbereichs 3 des Getränkehalters 1 bewegt werden und folglich das sich im Getränkehalter 1 befindliche Getränkebehältnis 6 sicher fixieren.

Oder aber die Elektromagnete 5 können bei gegensinniger magnetischer Orientierung zu den als Permanentmagnete ausgebildeten Haltenocken 4 eine anziehende Wirkung auf diese Haltenocken 4 ausüben, wodurch die Haltenocken 4 in Richtung des Außenbereichs 8 des Getränkehalters 1 bewegt werden und folglich das sich im Getränkehalter 1 befindliche Getränkebehältnis 6 zur Entnahme freigeben.

Die Änderung des Schaltzustands der schaltbaren Elektromagnete 5 kann dabei über ein sich in der Nähe des Getränkehalters 1 befindliches Bedienelement erfolgen, das hierzu insbesondere als ein zwei Schaltzustände aufweisender Tastschalter mit push-push-Betätigung oder als ein zwei Schaltzustände aufweisender Wippschalter oder als ein zwei Schaltzustände aufweisender Drehschalter ausgebildet ist.

## Patentansprüche

1. Getränkehalter (1) eines Kraftfahrzeugs, mit Halteelementen (4) zur Fixierung von Getränkebehältnissen (6) im Getränkehalter (1),
**dadurch gekennzeichnet,**
**dass** als Halteelemente eine Vielzahl von als Permanentmagnete mit gleicher Magnetpolanordnung ausgebildeten Haltenocken (4) vorgesehen sind, die in mindestens zwei Haltebereichen (7) übereinander und beabstandet voneinander in der Wandung (2) des Getränkehalters (1) und von der Wandung (2) des Getränkehalters (1) überstehend angeordnet sind,
und **dass** im Außenbereich (8) des Getränkehalters (1) für jeden Haltebereich (7) ein zu den als Permanentmagnete ausgebildeten Haltenocken (4) des jeweiligen Haltebereichs (7) korrespondierender Elektromagnet (5) angeordnet ist.

2. Getränkehalter (1) nach Anspruch 1,
**dadurch gekennzeichnet,**
**dass** die als Permanentmagnete ausgebildeten Haltenocken (4) aus einem magnetisierbaren Kunststoffmaterial bestehen.

3. Getränkehalter (1) nach Anspruch 2,
**dadurch gekennzeichnet,**
**dass** die als Permanentmagnete ausgebildeten Haltenocken (4) aus magnetisierbarem Polyphenylsulfid (PPS) bestehen.

4. Getränkehalter (1) nach einem der Ansprüche 1 bis 3,
**dadurch gekennzeichnet,**
**dass** ein Bedienelement zum Schalten der Elektromagnete (5) vorgesehen ist.

5. Getränkehalter (1) nach einem der Ansprüche 1 bis 4,
**dadurch gekennzeichnet,**
**dass** die als Permanentmagnete ausgebildeten Haltenocken (4) in Form einer Konturenlehre in der Wandung (2) des Getränkehalters (1) und von der Wandung (2) des Getränkehalters (1) überstehend angeordnet sind.

6. Getränkehalter (1) nach einem der Ansprüche 1 bis 5,
**dadurch gekennzeichnet,**
**dass** die Elektromagnete (5) äquidistant beabstandet voneinander im Außenbereich (8) des Getränkehalters (1) angeordnet sind.

7. Getränkehalter (1) nach einem der Ansprüche 1 bis 6,
**dadurch gekennzeichnet,**
**dass** die Elektromagnete (5) radial im Außenbereich (8) des Getränkehalters (1) um den Getränkehalter (1) herum angeordnet sind.

8. Getränkehalter (1) nach einem der Ansprüche 1 bis 7,
**dadurch gekennzeichnet,**
**dass** der Getränkehalter (1) in der Mittelkonsole des Kraftfahrzeugs oder in einer Armauflage des Kraftfahrzeugs angeordnet ist.

## Claims

1. Beverage holder (1) for a motor vehicle, comprising holding elements (4) for fixing beverage containers (6) in the beverage holder (1),
**characterized in that**
a plurality of holding cams (4) in the form of permanent magnets comprising the same magnetic pole arrangement are provided as holding elements and, in at least two holding regions (7), are arranged one above the other and spaced apart from each other in the wall (2) of the beverage holder (1) and so as to project from the wall (2) of the beverage holder (1),
and **in that,** for each holding region (7), an electromagnet (5) corresponding to the holding cams (4) in the form of permanent magnets of the relevant holding region (7) is arranged in the outer region (8) of the beverage holder (1).

2. Beverage holder (1) according to claim 1,
**characterized in that**
the holding cams (4) in the form of permanent magnets are made of a magnetizable plastics material.

3. Beverage holder (1) according to claim 2,
**characterized in that**
the holding cams (4) in the form of permanent magnets are made of magnetizable polyphenyl sulfide (PPS).

4. Beverage holder (1) according to any of claims 1 to 3,
**characterized in that**
an operating element for switching the electromagnets (5) is provided.

5. Beverage holder (1) according to any of claims 1 to 4,
**characterized in that**
the holding cams (4) in the form of permanent magnets are arranged in the form of a contour gauge in the wall (2) of the beverage holder (1) and so as to protrude from the wall (2) of the beverage holder (1).

6. Beverage holder (1) according to any of claims 1 to 5,
**characterized in that**
the electromagnets (5) are arranged equidistantly from one another in the outer region (8) of the beverage holder (1).

7. Beverage holder (1) according to any of claims 1 to 6,
**characterized in that**
the electromagnets (5) are arranged radially in the outer region (8) of the beverage holder (1) around the beverage holder (1).

8. Beverage holder (1) according to any of claims 1 to 7,
**characterized in that**
the beverage holder (1) is arranged in the center console of the motor vehicle or in an armrest of the motor vehicle.

## Revendications

1. Porte-boisson (1) d'un véhicule automobile, comportant des éléments de retenue (4) pour la fixation de récipients à boissons (6) dans le porte-boisson (1),
**caractérisé en ce**
**qu'**est prévue comme éléments de retenue une pluralité de cames de retenue (4) réalisées sous forme d'aimants permanents avec le même agencement de pôles magnétiques, lesquelles sont disposées dans au moins deux zones de retenue (7) les unes au-dessus des autres et à distance les unes des autres dans la paroi (2) du porte-boisson (1) en dépassant de la paroi (2) du porte-boisson (1),
**et que** dans la zone extérieure (8) du porte-boisson (1) est disposé, pour chaque zone de retenue (7), un électroaimant (5) correspondant aux cames de retenue (4) de la zone de retenue (7) respective réalisées sous forme d'aimants permanents.

2. Porte-boisson (1) selon la revendication 1,
**caractérisé en ce**
**que** les cames de retenue (4) réalisées sous forme d'aimants permanents sont constituées d'un matériau plastique magnétisable.

3. Porte-boisson (1) selon la revendication 2,
**caractérisé en ce**
**que** les cames de retenue (4) réalisées sous forme d'aimants permanents sont constituées de polyphénylsulfone (PPS) magnétisable.

4. Porte-boisson (1) selon l'une des revendications 1 à 3,
**caractérisé en ce**
**qu**'un élément de commande pour la commutation des électroaimants (5) est prévu.

5. Porte-boisson (1) selon l'une des revendications 1 à 4,
**caractérisé en ce**
**que** les cames de retenue (4) réalisées sous forme d'aimants permanents sont disposées sous la forme d'un gabarit de contour dans la paroi (2) du porte-boisson (1) et en dépassant de la paroi (2) du porte-boisson (1).

6. Porte-boisson (1) selon l'une des revendications 1 à 5,
**caractérisé en ce**
**que** les électroaimants (5) sont disposés à équidistance les uns des autres dans la zone extérieure (8) du porte-boisson (1).

7. Porte-boisson (1) selon l'une des revendications 1 à 6,
**caractérisé en ce**
**que** les électroaimants (5) sont disposés autour du porte-boisson (1) radialement dans la zone extérieure (8) du porte-boisson (1).

8. Porte-boisson (1) selon l'une des revendications 1 à 7,
**caractérisé en ce**
**que** le porte-boisson (1) est disposé dans la console centrale du véhicule automobile ou dans un accoudoir du véhicule automobile.
